# EUROPÄISCHE PATENTSCHRIFT

(11) **EP 4 460 713 B1**
(45) Veröffentlichungstag und Bekanntmachung des Hinweises auf die Patenterteilung: **05.08.2026**
(21) Anmeldenummer: 22844022.8
(22) Anmeldetag: 19.12.2022
(51) Int. Cl.: G01S 7/524, G01S 15/88, G10K 11/28, B65G 43/08

(54) **INSTALLATIONSANORDNUNG, ULTRASCHALL-STAUSCHALTER HIERFÜR SOWIE DESSEN VERWENDUNG UND BETRIEBSVERFAHREN**
INSTALLATION ARRANGEMENT, ULTRASONIC JAM SWITCH THEREFOR, AND THE USE THEREOF AND OPERATING METHOD
ENSEMBLE INSTALLATION, INTERRUPTEUR DE BLOCAGE À ULTRASONS ASSOCIÉ, UTILISATION ET PROCÉDÉ DE FONCTIONNEMENT ASSOCIÉS

(30) Priorität: 07.01.2022 DE 102022000053
(43) Veröffentlichungstag der Anmeldung: 13.11.2024
(73) Patentinhaber: microsonic GmbH, 44263 Dortmund (DE)
(72) Erfinder: SCHULTE, Johannes, 44263 Dortmund (DE); HERGET, Jens, 44388 Dortmund (DE)
(74) Vertreter: Wickord, Wiro
(86) Internationale Anmeldenummer: PCT/DE2022/100969
(87) Internationale Veröffentlichungsnummer: WO 2023/131372

(56) Entgegenhaltungen:
- WO-A1-01/87025
- DE-A1- 102010 000 596
- US-A- 4 530 077

## Beschreibung

Die Erfindung betrifft einen Stauschalter für die Erkennung von sich auf Förderanlagen aufstauenden Behältern, insbesondere Flaschen. Ferner betrifft die Erfindung eine Installationsanordnung mit einem Stauschalter sowie dessen Verwendung und ein Betriebsverfahren desselben.

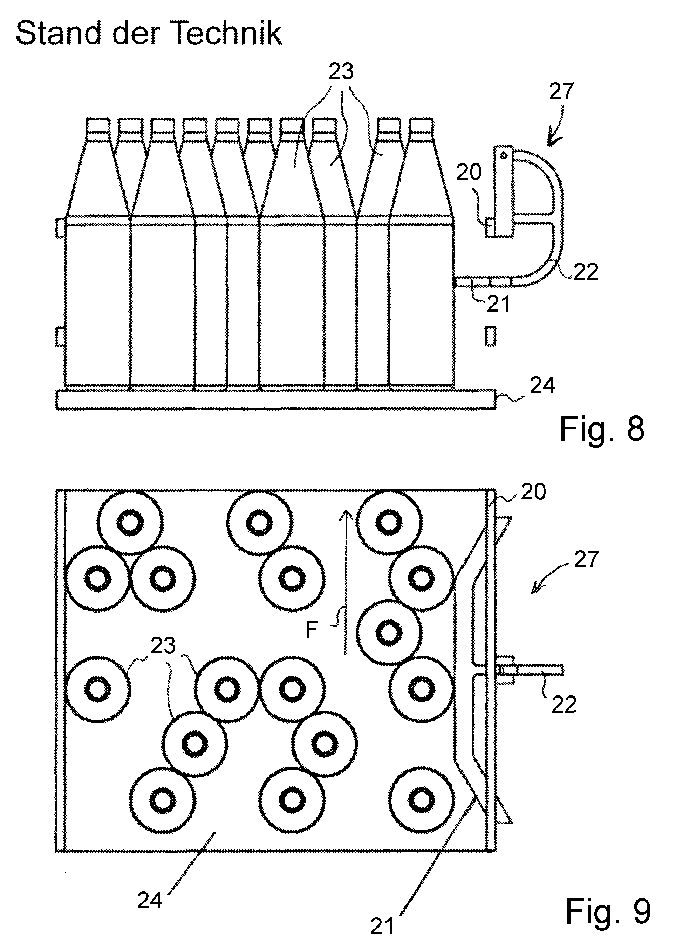

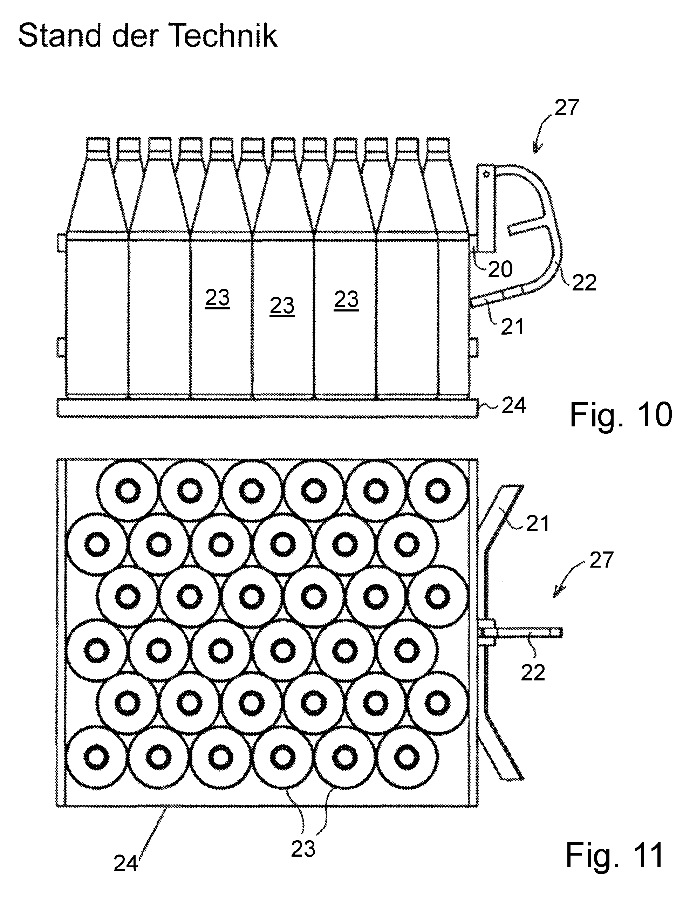

In der Getränke- und Abfüllindustrie, in der Behälter wie zum Beispiel Flaschen mit Getränken befüllt werden, werden diese Behälter sowohl im leeren als auch im gefüllten Zustand auf einer Förderanlage mit einer Fördereinrichtung, insbesondere einem Förderband transportiert. Das Förderband kann eine Gesamtbreite im Bereich von zum Beispiel 200 mm bis 1.000 mm aufweisen. Seitliche Geländer verhindern, dass die Behälter vom Förderband fallen können. Die Behälter können sich zunächst in einer aufgelockerten, chaotischen Verteilung auf dem Förderband befinden (Fig. 8, 9). Mit dem weiteren Transport auf dem Förderband verdichtet sich dieser Behälterstrom. Die Förderanlage wird in Staustrecken eingeteilt. Das sich kontinuierlich in eine Förderrichtung bewegende Förderband transportiert die Behälter zu einem Übergabepunkt. Unterwegs werden die Behälter gestaut, so dass das Förderband über seine Gesamtbreite mit Behältern gefüllt ist. Seitlich an einem der Geländer des Förderbands sind sogenannte Stauschalter angebracht, die ein Signal geben, wenn sich in diesem Bereich die Behälter gestaut haben (Fig. 10, 11). Bei den am Markt bekannten Stauschaltern handelt es sich in der Regel um mechanische Stauschalter 27, die aus einem mechanischen Bügel 21 bestehen, der parallel zum Geländer 20 beziehungsweise zur Förderrichtung F der Fördereinrichtung 24 beziehungsweise des Förderbands orientiert ist (Fig. 8 bis 11). Dieser Bügel ist starr mit einem verschwenkbaren Kipphebel 22 verbunden, so dass die gestauten Behälter den Bügel ca. 20 mm bis 30 mm nach außen, das heißt vom Förderband weg, drücken können. An dem Kipphebel befindet sich eine Metallfahne, die von einem induktiven Näherungsschalter abgefragt werden kann. Ein mechanischer Stauschalter der vorgenannten Art ist in der DE 10 2010 000 596 A1 offenbart.

Stauen sich nun die Behälter im Bereich dieses Bügels, drücken die Behälter den Bügel des mechanischen Stauschalters nach außen und über den Kipphebel wird die Metallfahne in den Erfassungsbereich eines induktiven Näherungsschalters des mechanischen Stauschalters bewegt. Ein Initiator löst aus und gibt ein Schaltsignal am Ausgang des mechanischen Stauschalters aus. Damit bekommt eine mit dem mechanischen Stauschalter wirkverbundene Steuerung der Förderanlage ein Signal, dass in diesem Bereich der Fördereinrichtung ein Behälterstau aufgetreten ist. Diese mechanischen Stauschalter mit Kipphebel und ihren beweglichen Teilen sind aufwendig in der Konstruktion und sehr störanfällig und bedürfen regelmäßig einer Wartung.

Die US 4 530 077 A offenbart ein Ultraschallsystem mit einem Ultraschallsensor zur Objekterkennung, welcher eine scharfgebündelte Schallkeule ausgibt und als ein Näherungsschalter ausgebildet ist. Das Ultraschallsystem weist einen der Schallkeule ausgebenden Apertur des Ultraschallsensors vorgelagerten Reflektor mit einer schallumlenkenden Schallumlenkfläche auf. Die Schallumlenkfläche ist hier kegelförmig ausgebildet, wobei eine Rotationsachse der Schallumlenkfläche außerhalb einer Sensorachse beziehungsweise eines Zentralstrahls des Ultraschallsensors angeordnet ist.

In der WO 01/87025 A1 offenbart ein Lautsprechersystem umfassend einen Reflektor mit einer schallumlenkenden Schallumlenkfläche, welche konvex und konkav gekrümmte Flächenbereiche aufweist.

Aufgabe der Erfindung ist es daher, einen wartungsarmen Stauschalter für die Erkennung von sich auf Förderanlagen aufstauenden Behältern, insbesondere Flaschen, anzugeben. Ferner wird die Aufgabe durch eine erfindungsgemäße Installationsanordnung, ein erfindungsgemäßes Betriebsverfahren und eine erfindungsgemäße Verwendung gelöst.

Das Ziel dieser Erfindung besteht insofern darin, die taktil arbeitenden mechanischen Stauschalter durch einen Stauschalter mit einem berührungslos arbeitenden Sensor zu ersetzen. Dies muss ein tastender Sensor sein, der die sich aufstauenden Behälter, insbesondere Flaschen, erfassen kann. Optische Sensoren scheiden hier aus, da Behälter und insbesondere Flaschen aus einem hochtransparenten Werkstoff, insbesondere hochtransparentem Kunststoff oder Glas hergestellt sein können. Optische Sensoren haben Schwierigkeiten, Behälter aus derart hochtransparenten Materialien sicher zu erkennen.

Naheliegender ist hierfür die Verwendung eines Ultraschallsensors mit einem Schaltausgang, bei dem ein definierter Schaltabstand eingestellt ist.

Ultraschallsensoren können grundsätzlich alle Objekte erkennen, die den Schall reflektieren, und arbeiten völlig farbunabhängig, sodass sie auch Objekte und insbesondere Behälter aus hochtransparenten Materialien sicher erkennen können. Derartige Ultraschallsensoren arbeiten nach der Echolaufzeitmessung und strahlen zyklisch einen kurzen Ultraschallimpuls aus, der sich mit der Schallgeschwindigkeit in der Luft ausbreitet. Trifft der Ultraschallimpuls auf einen Behälter, insbesondere eine Flasche, wird der Ultraschallimpuls reflektiert und gelangt als Echosignal (Echo) zurück zum Ultraschallsensor. Aus der Laufzeit zwischen dem Aussenden des Ultraschallimpulses und dem Empfang des von dem zu erfassenden Behälter zurück reflektierten Echosignals berechnet der Ultraschallsensor mit der ihm bekannten Schallgeschwindigkeit einen gemessenen Abstand zu dem Behälter. Hat der Behälter einen bestimmten Schaltabstand unterschritten, wird der Ausgang gesetzt. Diese auch Ultraschall-Näherungsschalter genannten Ultraschallsensoren haben in industriellen Anwendungen eine breite Verwendung gefunden. Es ist Stand der Technik, dass diese industriell eingesetzten Ultraschall-Näherungsschalter einen rotationssymmetrisch schlanken beziehungsweise scharf gebündelten Erfassungsbereich aufweisen. Man spricht auch von einem schlanken Schallfeld. Das ist in der Regel auch gewünscht, da der Ultraschall-Näherungsschalter einzelne Objekte erkennen, oder zur Füllstandsmessung in einem schmalen Tank eingesetzt werden soll. Wird der Ultraschall-Näherungsschalter zum Beispiel für eine Füllstandsmessung in einem kleinen Tank oder kleinen Gefäß eingesetzt, ist es wünschenswert, nur von der Flüssigkeitsoberfläche eine Schallreflexion zu bekommen, aber nicht von den inneren Wänden des Tanks, beziehungsweise des kleinen Gefäßes.

Für den Einsatz als Stauschalter sind diese rotationssymmetrischen scharfbündelnden Erfassungsbereiche der Ultraschallsensoren in einer senkrecht zur Förderrichtung der Fördereinrichtung verlaufenden, vertikalen Ebene wünschenswert, da der Ultraschallsensor außen vor beziehungsweise an dem Geländer der Fördereinrichtung gehalten ist und quer zur Transportrichtung der Fördereinrichtung flach über diese messen soll, da die Fördereinrichtung selber nicht detektiert werden darf.

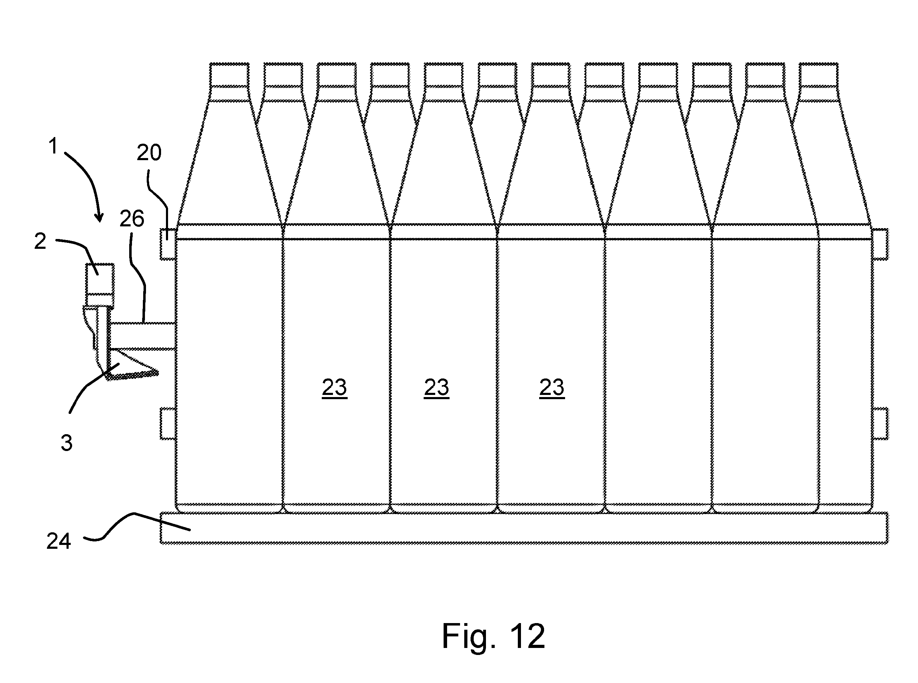

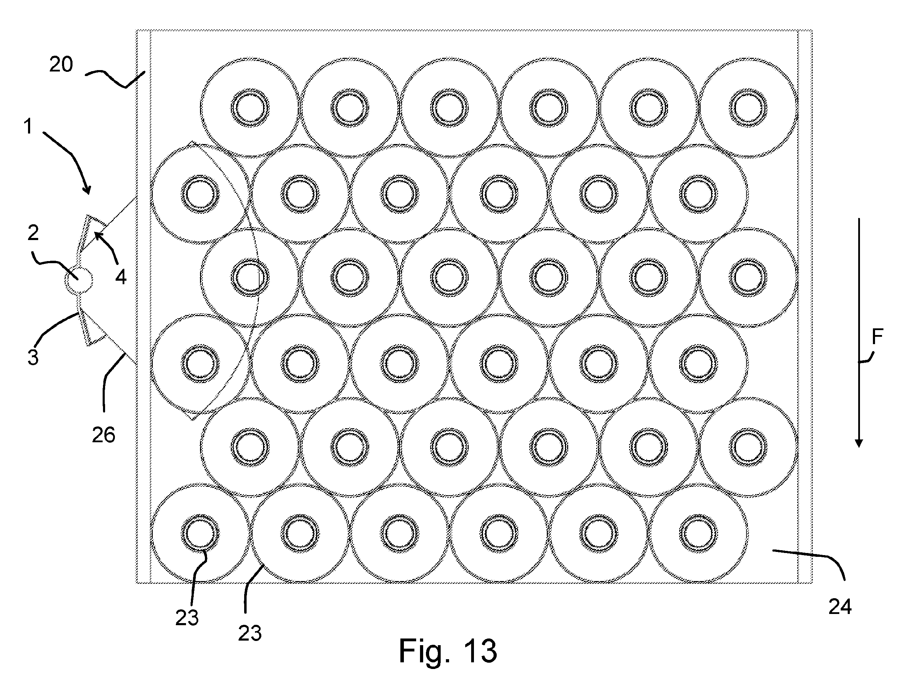

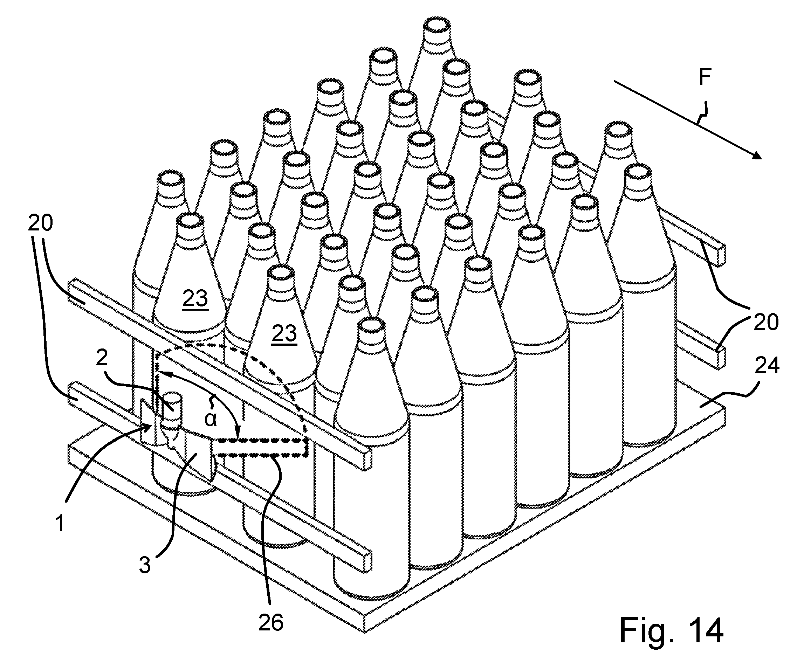

Da die zu erfassenden Behälter, insbesondere Flaschen, ganz unterschiedlicher Formen und Größen und somit unterschiedlicher Behälter- beziehungsweise Flaschenhöhen transportiert werden, wird der erfindungsgemäße Stauschalter nach einer erfindungsgemäßen Installationsanordnung bevorzugt knapp über der Fördereinrichtung beziehungsweise dem Förderband messend angeordnet (vergleiche Fig. 12 bis 14). Dies hat den Vorteil, dass der Stauschalter alle Behältergrößen abtasten kann, ohne dass seine Anbauposition des Stauschalters mit jedem Formatwechsel der Behälter angepasst werden muss. In einer zu der Förderrichtung des Förderbands parallelen, horizontalen Ebene ist der rotationssymmetrische scharfbündelnde Erfassungsbereich des Ultraschallsensors dagegen von Nachteil, da ein auf der Fördereinrichtung transportierter Behälter nur dann sicher von dem Ultraschallsensor erkannt wird, wenn sich dieser nahezu mittig im Erfassungsbereich des Ultraschallsensors befindet.

Da die meisten Behälter, insbesondere Flaschen, einen runden Querschnitt haben, wird der Schall sehr schnell von diesen weggespiegelt, sobald sich der Behälter etwas links oder rechts außerhalb des Zentralstrahls des Ultraschallsensors befindet.

Da ein scharfbündelnder Ultraschallsensor als Stauschalter quer zur Förderrichtung der Fördereinrichtung misst, wird, sobald ein Behälter in den Erfassungsbereich des Ultraschallsensors eintritt, der Schall die meiste Zeit von dem Behälter seitlich wegreflektiert. Trifft dieser seitlich wegreflektierte Schallimpuls bei einem Behälterstau auf der Fördereinrichtung auf einen Nachbarbehälter auf, wird er dort erneut reflektiert und gegebenenfalls als Echo zurück in Richtung des Ultraschallsensors reflektiert. Da der Ultraschallsensor jedoch einen rotationssymmetrisch scharfbündelnden Erfassungsbereich hat, kann er dieses Echo nicht empfangen.

Gegenstand dieser Erfindung ist es daher, einen Stauschalter mit einem Ultraschallsensor so auszubilden, dass der Erfassungsbereich des Ultraschallsensors in der vertikalen Ebene (zweite Ebene), senkrecht zur Förderrichtung des Förderbands, nach wie vor stark gebündelt ist, so dass der Ultraschallsensor keine Störreflexionen von der Fördereinrichtung empfängt, und der Erfassungsbereich in der horizontalen Ebene (erste Ebene), parallel zur Förderrichtung des Förderbands, so stark aufgespreizt ist, dass der Ultraschallsensor auch dann noch ein direktes Echo von einem Behälter, insbesondere einer Flasche, empfängt, wenn dieser sich außerhalb des Zentralstrahls des Ultraschallsensors befindet und/oder dass der Ultraschallsensor ein über einen benachbarten Behälter beziehungsweise einen Nachbarbehälter zurück reflektiertes Echo erfassen kann.

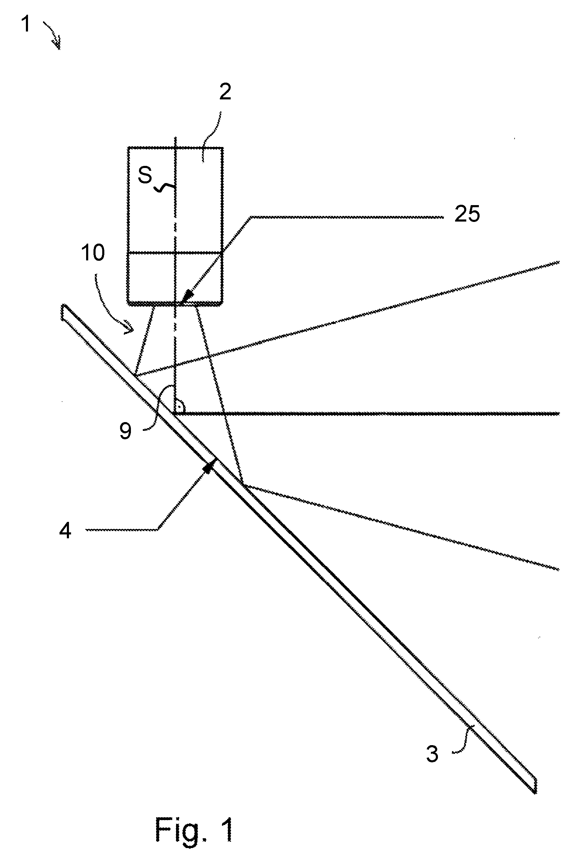

Es ist bekannt, dass mit einer ebenen Fläche das Schallfeld eines Ultraschallsensors nahezu verlustfrei um einen definierten Winkel umgelenkt werden kann. So gibt es für Ultraschallsensoren Reflektoren mit Schallumlenkflächen, die eine ebene Fläche aufweisen, die mit einem Neigungswinkel von 45° zu einer Sensorachse des Ultraschallsensors beziehungsweise zu dem austretenden Schallfeld/der Schallkeule des Ultraschallwandlers orientiert ist, so dass ein fluchtend zu der Sensorachse verlaufender Zentralstrahl des Ultraschallsignals beziehungsweise der Schallkeule des Ultraschallsensors daran um insgesamt 90° umgelenkt wird (Fig. 1). Trifft der Zentralstrahl auf die Schallumlenkfläche, wird dieser gemäß der physikalischen Gesetzmäßigkeit Einfallswinkel = Ausfallswinkel (je 45°) umgelenkt. Das Schallfeld eines Ultraschallsensors bildet sich immer divergent aus, so dass alle anderen gedachten Vektoren entsprechend umgelenkt werden.

Der Erfindung liegt der Gedanke zu Grunde, eine derartige Schallumlenkfläche eines Reflektors so auszugestalten, dass die Schallkeule/das Schallfeld eines auf die Schallumlenkfläche gerichteten Ultraschallsensors in einer ersten Ebene (radial) aufgespreizt wird und in einer zu der ersten Ebene senkrecht orientierten zweiten Ebene nicht aufgespreizt, beziehungsweise im besten Fall sogar noch gebündelt wird. Die erste Ebene definiert dabei eine Erstreckung eines Erfassungsbereichs des Ultraschallsensors in Bezug auf die Förderrichtung der Fördereinrichtung, die zweite Ebene definiert eine Erstreckung des Erfassungsbereichs des Ultraschallsensors in Bezug auf einen Höhenbereich oberhalb der Fördereinrichtung.

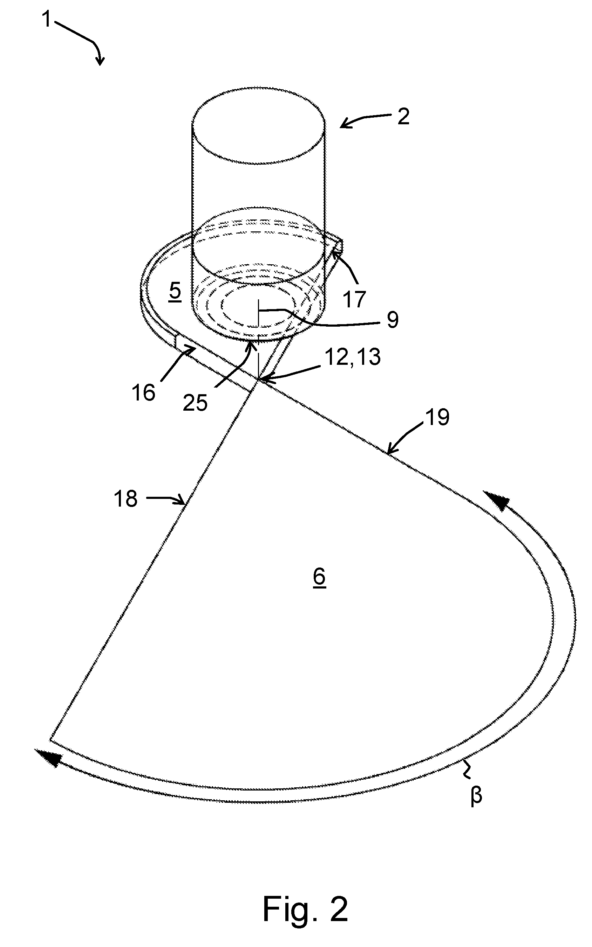

Denkt man sich eine 45° Schallumlenkfläche wie in Fig. 1 dargestellt zunächst als zweidimensionale plane Ebene im Raum ausgebildet und krümmt dann gemäß einer Weiterbildung der Erfindung diese plane Ebene um den Zentralstrahl 9 des Ultraschallsensors 2 in einem definierten Winkelbereich beziehungsweise Rotationswinkel β von zum Beispiel ±75° im Raum mit der Sensorachse S des Ultraschallsensors als Rotationsachse, entstehen zwei mit ihren Spitzen 12, 13 aufeinanderstehende, Flächenbereiche einer kreiskegelförmigen Oberfläche (Fig. 2), wobei der figürlich untere zweite Flächenbereich 6 der kreiskegelförmigen Oberfläche konvex und der figürlich obere erste Flächenbereich 5 der kreiskegelsegmentförmigen Oberfläche konkav gekrümmt sind. Es stehen insofern zwei dreieckige, gekrümmte Flächenbereiche von der Manteloberfläche von Kreiskegeln mit ihren einander zugewandten Spitzen aufeinander, wobei der Zentralstrahl 9 der Schallkeule des Ultraschallsensors einen Verbindungspunkt der Spitzen 12, 13 der Flächenbereiche schneidet. Diese Anordnung führt dazu, dass die Schallkeule 10 des Ultraschallsensors von der Schallumlenkfläche nun an den konvexen und konkaven Flächenbereichen in der ersten Ebene aufgespreizt/zerstreut wird, in seiner zweiten Ebene aber unverändert beziehungsweise nicht weiter gebündelt abgestrahlt wird.

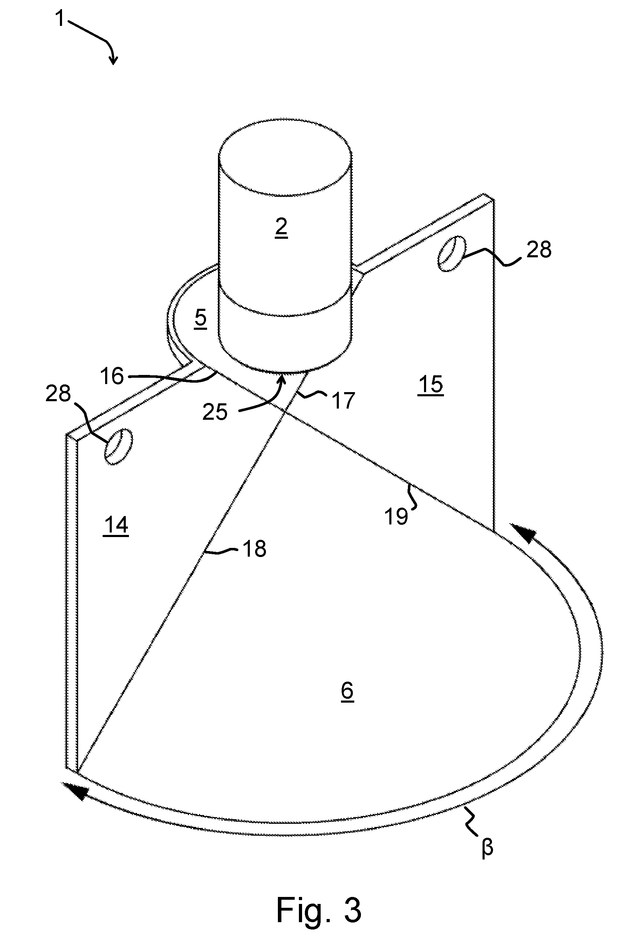

Eine weitere vorteilhafte Ausführungsform für die Schallumlenkfläche 4 des erfindungsgemäßen Stauschalters 1 gibt Fig. 3 an. In die Spitzen 12, 13 mündende Seitenkanten 16, 17, 18, 19 der gekrümmten Flächenbereiche 5, 6 sind hier über ebene Versteifungswände 14, 15 miteinander verbunden. In den Versteifungswänden 14, 15 sind Befestigungsöffnungen 28 zur Montage des Stauschalters 1 vorgesehen.

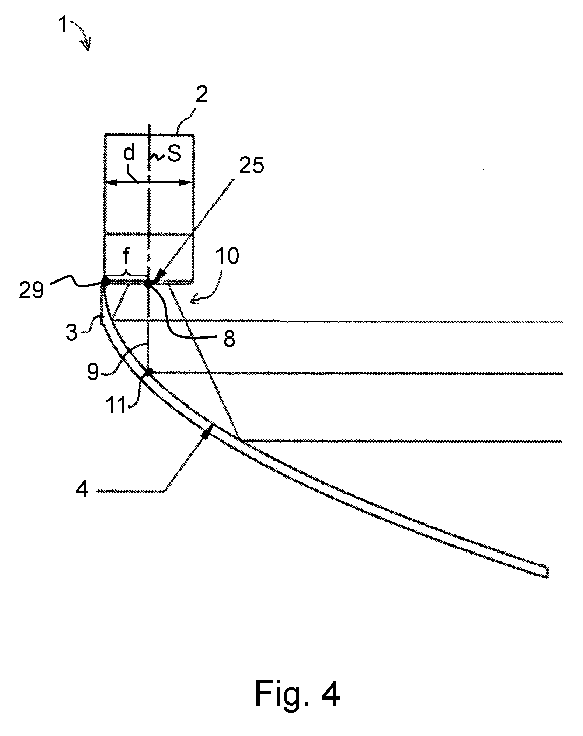

In einer alternativen Ausgestaltung der Erfindung wird die Schallumlenkfläche statt einer im Raum gekrümmten planen Ebene als eine einfach gekrümmte Fläche mit einem Querschnitt in Form einer Halbparabel (nachfolgend auch Parabel genannt) ausgebildet. Der Ultraschallsensor ist zu der Schallumlenkfläche so angeordnet, dass eine die Schallkeule ausgebende Apertur 25 des Ultraschallwandlers und der darauf senkrecht stehende Zentralstrahl 9 mit dem Brennpunkt 8 der Parabel zusammenfallen und der Zentralstrahl an der Schallumlenkfläche 4 um 90° (Eintritts- und Austrittswinkel je 45°) umgelenkt wird. Alle Strahlvektoren des divergenten Schallfeldes werden in der Schallumlenkfläche umgelenkt und treten als parallel angeordnetes Strahlenbündel aus (Fig. 4). Die Strecke vom Brennpunkt 8 bis zu einem Scheitelpunkt 29 der Parabel wird auch als Brennweite f bezeichnet. Bezogen auf den erfindungsgemäßen Stauschalter ist die Brennweite senkrecht zu dem Zentralstrahl des Ultraschallwandlers orientiert und schneidet diesen im Brennpunkt. Die Brennweite f der parabelförmigen Schallumlenkfläche des erfindungsgemäßen Stauschalters ist so groß zu wählen, dass sie betragsmäßig mindestens der Hälfte eines Durchmesser d des schallabstrahlenden Ultraschallwandlers entspricht (vergleiche Fig. 4).

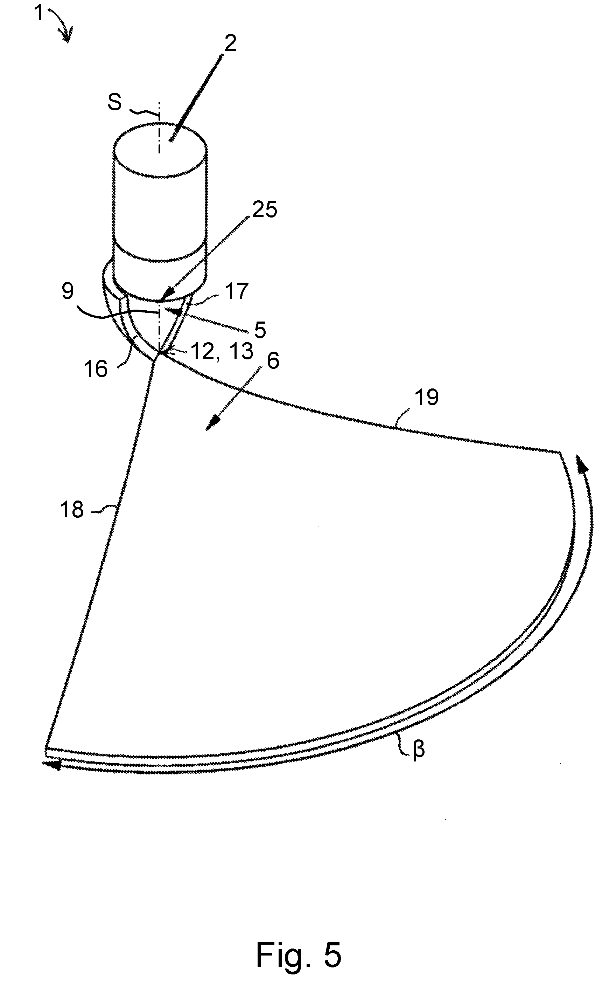

Nach einer Weiterbildung der Erfindung ist nun diese im Querschnitt parabelförmige Schallumlenkfläche um die Achse des auf der schallabstrahlenden Sensoroberfläche senkrecht stehenden Zentralstrahls des Ultraschallsensors um einen bestimmten Betrag eines Rotationswinkels β gekrümmt, sodass zwei parabolische Flächenbereiche 5, 6 entstehen. Dabei ist ein erster Flächenbereich 5 oberhalb des Auftreffpunktes (Projektionsbrennpunkt 11) des Zentralstrahls auf die Oberfläche konkav und ein zweiter Flächenbereich 6 unterhalb des Auftreffpunktes konvex gekrümmt (Fig. 5). Das Schallfeld beziehungsweise die Schallkeule 10 des Ultraschallsensors, welcher auf eine solche parabolische Oberfläche als Schallumlenkfläche gerichtet ist, wird in der zweiten Ebene sehr stark gebündelt (vergleiche Fig. 4) und in der ersten Ebene wie gewünscht aufgespreizt beziehungsweise zerstreut.

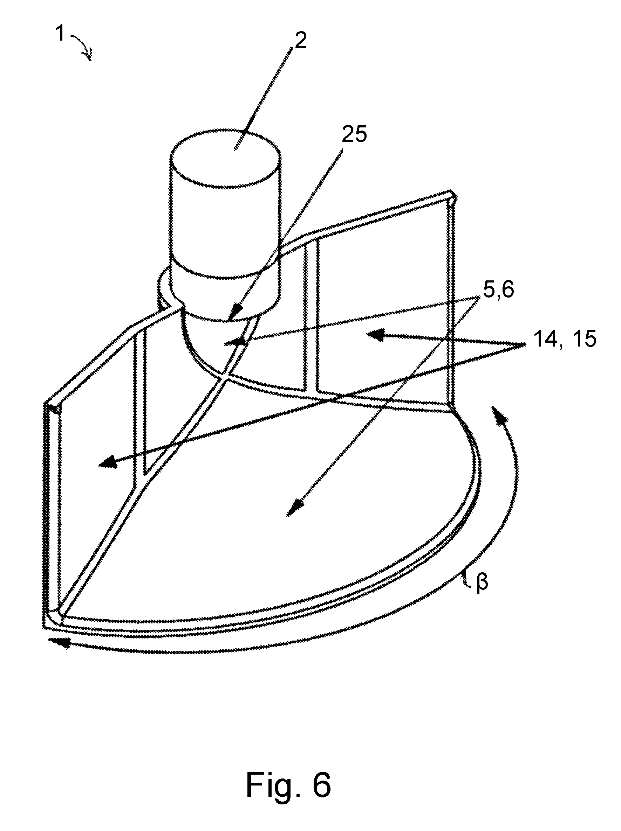

Fig. 6 zeigt eine weitere, vorteilhafte Ausbildungsform für die Schallumlenkfläche 4 des erfindungsgemäßen Stauschalters, mit beidseitig seitlichen, die parabolisch gekrümmten Flächenbereiche 5, 6 der Schallumlenkfläche an den in die Spitzen mündende Seitenkanten verbindenden Versteifungswänden 14, 15, in denen in einer weiteren alternativen Ausführungsform auch wie in Fig. 3 dargestellte Befestigungsöffnungen 28 für die Montage des Stauschalters analog vorgesehen werden können.

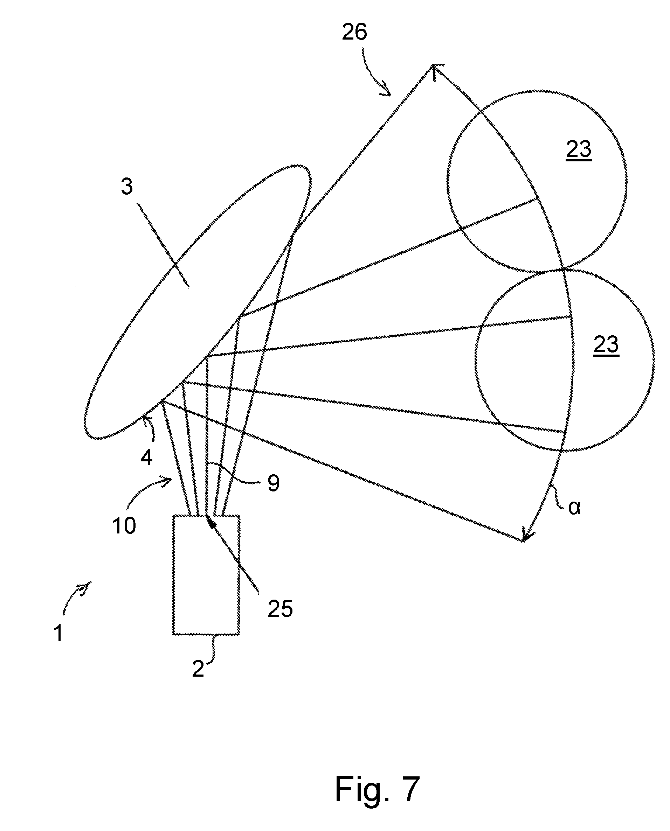

Natürlich sind unter Beibehaltung der erfinderischen Idee auch anders geformte Schallumlenkflächen für den Stauschalter denkbar, die eine Aufspreizung des Schallfeldes des Ultraschallsensors bewirken. Fig. 7 zeigt diesbezüglich einen nicht erfindungsgemäßen Reflektor 3 mit einer elliptisch beziehungsweise konvex gekrümmten Schallumlenkfläche 4, die horizontal von einem Ultraschallsensor 2 angestrahlt wird. Auch hier wird das Schallfeld des Ultraschallsensors derart umgelenkt, dass es mit einem breiten Zerstreuungswinkel α aufgespreizt austritt, so dass der Erfassungsbereich 26 des Ultraschallsensors in Bezug auf die Förderrichtung der Fördereinrichtung aufgeweitet ist.

Wird nun gemäß einer erfindungsgemäßen Installationsanordnung (vergleiche Fig. 12 bis 15) ein Ultraschallsensor 2 mit einer nach einer der vorgenannten Ausführungsformen ausgeformten Schallumlenkfläche 4 seitlich an beziehungsweise vor dem Geländer 20 der Fördereinrichtung 24 angeordnet, so dass das Schallfeld beziehungsweise die Schallkeule 10 des Ultraschallsensors 2 in der zweiten Ebene, senkrecht zu der Förderrichtung, erhalten bleibt oder sogar noch gebündelt und in der ersten Ebene breit aufgefächert wird, kann von jedem Behälter 23, der sich innerhalb des breit aufgefächerten Schallfelds beziehungsweise Erfassungsbereichs 26 befindet, eine Reflexion direkt zum Ultraschallsensor zurück gelangen.

Ein aus dem Stand der Technik bekannter mechanischer Stauschalter 27 hat einen Abtastbereich, der parallel zum Geländer 20 liegt. Ein Schaltweg beziehungsweise eine Tastweite des mechanischen Stauschalters beträgt typischerweise 20 mm bis 30 mm.

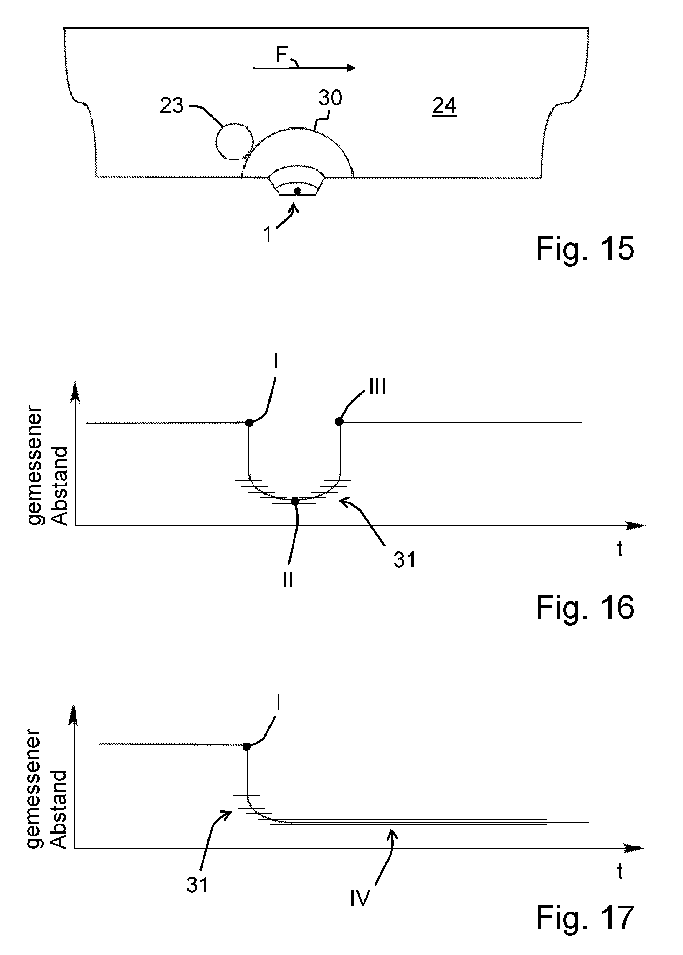

Der erfindungsgemäße Stauschalter 1 mit dem Ultraschallsensor 2 und dem davor gehaltenen Reflektor 3 mit der - wie zuvor erläutert - charakteristischen Schallumlenkfläche 4 weist einen Erfassungsbereich 26 auf, der im Vergleich zu einem mechanischen Stauschalter einen zumindest ähnlich breiten Erfassungsbeziehungsweise Abtastbereich und ein zu dem Schaltbereich des mechanischen Stauschalters zumindest vergleichbar großer Schaltabstand beziehungsweise eine vergleichbar große Tastweite abdeckt, wobei sich der Schaltabstand 30 radial ausbildet (vergleiche Fig. 15).

Die Schallumlenkfläche des Reflektors ist bevorzugt aus einem festen Material mit einer glatten Oberfläche hergestellt, welches die Schallanteile nahezu verlustfrei reflektiert beziehungsweise umlenkt.

Ein Stau von auf der Fördereinrichtung transportierten Behältern zeichnet sich dadurch aus, dass sich die Behälter, insbesondere Flaschen, nicht weiter vorwärtsbewegen. Ein aus dem Stand der Technik bekannter konventioneller Ultraschall-Näherungsschalter gibt ein Schaltsignal aus, wenn sich ein Behälter innerhalb des Erfassungsbereichs befindet und einen voreingestellten Schaltabstand unterschritten hat. Bei dem bekannten konventionellen Ultraschall-Näherungsschalter würde dies bedeuten, dass dieser auch dann ein Schaltsignal liefern würde, wenn ein Behälter durch den Erfassungsbereich des Ultraschallsensors transportiert wird und dabei der Schaltabstand unterschritten wird. Deshalb sind weitere Maßnahmen erforderlich, um auf der Fördereinrichtung einen sich in Bewegung befindlichen Behälter von einem gestauten Behälter unterscheiden zu können.

Erfindungsgemäß wir dies realisiert, indem die von dem erfindungsgemäßen Stauschalter 1 gemessenen Abstandswerte, die unterhalb des voreingestellten Schaltabstandes 30 liegen, auf ihre Veränderlichkeit beobachtet werden. Figur 16 zeigt diesbezüglich den charakteristischen Verlauf des gemessenen Abstands des Stauschalters 1 für einen auf der Fördereinrichtung 24 transportierten Behälter 23 über die Zeit t. Wird der Behälter längs des quer zur Fördereinrichtung arbeitenden Stauschalters 1 transportiert und befindet sich dieser im Erfassungsbereich 26 und der Abstand des Behälters zum Ultraschallsensor unterschreitet den voreingestellten Schaltabstand 30 des Stauschalters, wird der Behälter zunächst in mit einem größeren gemessenen Abstand erfasst (Punkt I). Der gemessene Abstand reduziert sich kontinuierlich so lange, bis sich der Behälter auf Höhe des Zentralstrahls frontal vor dem Ultraschallsensor befindet (Punkt II). Wird der Behälter weiter transportiert, erhöht sich der vom Stauschalter gemessene Abstand wieder, bis der Behälter endgültig den Erfassungsbereich des Stauschalters wieder verlassen hat und der Abstand des Behälters den Schaltabstand des Stauschalters überschreitet (Punkt III).

Im Falle eines Staus bleibt der Behälter dagegen für eine längere Zeit an gleicher Position innerhalb des Erfassungsbereiches des Stauschalters stehen. Ein Beispiel für einen hierfür charakteristischen Verlauf des gemessenen Abstands über die Zeit t gibt die Fig. 17 an. Der gemessene Abstand zum Behälter ändert sich dabei für die Zeit des Staus nicht (Bereich IV).

Deshalb analysiert der erfindungsgemäße Stauschalter kontinuierlich den Verlauf der gemessenen Abstände daraufhin, ob diese innerhalb einer definierten Zeitdauer ein definiertes Toleranzband 31 verlassen oder ob sich die gemessenen Abstände über die definierte Zeitdauer permanent innerhalb dieses Toleranzbandes aufhalten. Verlässt ein einmal erfasstes Echo das Toleranzband innerhalb der definierten Zeitdauer, geht der erfindungsgemäße Stauschalter davon aus, dass sich der Behälter nach wie vor auf der Fördereinrichtung in Bewegung befindet. Bleibt der gemessene Abstand innerhalb des Toleranzbandes, so wie in Punkt IV der Fig. 17, geht der Stauschalter davon aus, dass sich der Behälter momentan auf der Fördereinrichtung nicht bewegt und es zu einem Stau gekommen ist.

Wird der Behälter erstmals vom Stauschalter erkannt und liegt der gemessene Abstand zum Behälter unterhalb des voreingestellten Schaltabstands, wird um den gemessenen Abstand das Toleranzband gelegt. Wird der Behälter nun weiter auf der Fördereinrichtung transportiert, wird der neu gemessene Abstand das Toleranzband verlassen und um den neu gemessenen Abstand wird ein neues Toleranzband gelegt. Dieser Vorgang wiederholt sich immer wieder, solange der neu gemessene Abstand das Toleranzband verlässt.

Verlässt ein gemessener Abstand das aktuelle Toleranzband, geht der Stauschalter davon aus, dass der Behälter seine Position auf der Fördereinrichtung geändert hat, also kein Stau auf der Fördereinrichtung vorliegt.

Bleibt ein einmal erfasster Abstand dagegen innerhalb seines Toleranzbandes für eine definierte Mindestzeitdauer (vergleiche Fig. 17, Punkt IV), geht der Stauschalter davon aus, dass sich der Behälter nicht mehr bewegt, also ein Behälterstau auf der Fördereinrichtung vorliegt, und setzt ein Ausgangssignal für den Zustand "Stau erkannt".

Aus den weiteren Unteransprüchen sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Vorrichtung gelten selbstverständlich auch im Zusammenhang mit der erfindungsgemäßen Installationsanordnung, der erfindungsgemäßen Verwendung, dem erfindungsgemäßen Betriebsverfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Gleiche Bauteile und Bauteilfunktionen sind mit gleichen Bezugszeichen gekennzeichnet.

### Bezugszeichenliste

- 1: Stauschalter
- 2: Ultraschallsensor
- 3: Reflektor
- 4: Schallumlenkfläche
- 5: erster Flächenbereich
- 6: zweiter Flächenbereich
- 8: Brennpunkt
- 9: Zentralstrahl
- 10: Schallkeule
- 11: Projektionsbrennpunkt
- 12: Spitze
- 13: Spitze
- 14: Versteifungswand
- 15: Versteifungswand
- 16: Seitenkante
- 17: Seitenkante
- 18: Seitenkante
- 19: Seitenkante
- 20: Geländer
- 21: Bügel
- 22: Kipphebel
- 23: Behälter
- 24: Fördereinrichtung
- 25: Apertur
- 26: Erfassungsbereich
- 27: mechanischer Stauschalter
- 28: Befestigungsöffnung
- 29: Scheitelpunkt
- 30: Schaltabstand
- 31: Toleranzband
- α: Zerstreuungswinkel
- β: Rotationswinkel
- d: Durchmesser
- f: Brennweite
- t: Zeit
- F: Förderrichtung
- S: Sensorachse

## Patentansprüche

1. Stauschalter (1) zur Erkennung eines Staus von auf einer Fördereinrichtung (24) einer Förderanlage transportierten Behältern (23), insbesondere Flaschen, umfassend einen Ultraschallsensor (2), welcher eine um eine Sensorachse (S) scharfgebündelte Schallkeule (10) ausgibt, wobei der Ultraschallsensor (2) als ein Näherungsschalter zum Aussenden eines Ultraschallsignals und zum Empfangen eines von einem in einem Erfassungsbereich (26) des Stauschalters (1) anwesenden Behälters (23) zurück reflektierten Echosignals ausgebildet ist, **dadurch gekennzeichnet, dass** einer die Schallkeule (10) ausgebenden Apertur (25) des Ultraschallsensors (2) ein Reflektor (3) mit einer schallumlenkenden Schallumlenkfläche (4) vorgelagert ist, wobei die Schallumlenkfläche (4) so geformt und angeordnet ist, dass die von dem Ultraschallsensor (2) ausgegebene Schallkeule (10) an der Schallumlenkfläche (4) derart umgelenkt ist, dass die Schallkeule (10) in Bezug auf die Sensorachse (S) in einer ersten Ebene mit einem Zerstreuungswinkel (α) von 90° bis 180° aufgeweitet und in einer senkrecht zu der ersten Ebene orientierten zweiten Ebene gleichbleibend oder weiter zunehmend gebündelt ist, wobei die Schallumlenkfläche (4) zwei Flächenbereiche (5, 6) aufweist, wobei ein erster Flächenbereich (5) der Schallumlenkfläche (4) konkav geformt ist und wobei ein zweiter Flächenbereich (6) der Schallumlenkfläche (4) konvex geformt ist und wobei der zweite Flächenbereich (6) mit einer in Bezug auf die Sensorachse (S) axial größeren Distanz zu dem Ultraschallsensor (2) angeordnet ist als der erste Flächenbereich (5).

2. Stauschalter (1) nach Anspruch 1, **dadurch gekennzeichnet, dass** die Schallumlenkfläche (4) des Reflektors (3) in Bezug auf einen entlang der Sensorachse (S) verlaufenden Zentralstrahl (9) der von dem Ultraschallsensor (2) ausgegebenen Schallkeule (10) um 45° geneigt ist.

3. Stauschalter (1) nach Anspruch 1 oder 2, **dadurch gekennzeichnet, dass** die Flächenbereiche (5, 6) der Schallumlenkfläche (4) die Form eines Ausschnitts einer Manteloberfläche eines Rotationskörpers und vorzugsweise eines Paraboloids und/oder eines Hyperboloids und/oder eines Kegels aufweisen.

4. Stauschalter (1) nach Anspruch 1 oder 3, **dadurch gekennzeichnet, dass** die Flächenbereiche (5, 6) der Schallumlenkfläche (4) durch vorzugsweise dreieckig gekrümmte Ausschnitte einer Manteloberfläche eines aus zwei mit gegeneinander gerichteten Kegelspitzen angeordneten Kegeln gebildeten Doppelkegels gebildet sind, wobei der Doppelkegel durch Rotation mit einem Rotationswinkel (β) einer um 45° zu der Sensorachse (S) als Rotationsachse geneigten Geraden um die Sensorachse (S) gebildet ist.

5. Stauschalter (1) nach Anspruch 1 oder 3, **dadurch gekennzeichnet, dass** die Flächenbereiche (5, 6) der Schallumlenkfläche (4) durch vorzugsweise dreieckig gekrümmte Ausschnitte einer Manteloberfläche eines Rotationskörpers gebildet sind, wobei der Rotationskörper durch Rotation mit einem Rotationswinkel (β) einer Halbparabel um die Sensorachse (S) als Rotationsachse gebildet ist, wobei die Sensorachse (S) durch einen Brennpunkt (8) einer aus der Halbparabel gebildeten Parabel verläuft und im Brennpunkt (8) senkrecht zu einer Symmetrieachse der Parabel orientiert ist und wobei die Sensorachse (S) die Parabel in einem von dem Brennpunkt (8) aus auf die Parabel projizierten Projektionsbrennpunkt (11) schneidet.

6. Stauschalter (1) nach Anspruch 5, **dadurch gekennzeichnet, dass** eine Brennweite (f) der Parabel, welche entlang der Symmetrieachse der Parabel einem Abstand von einem Scheitelpunkt (29) bis zum Brennpunkt (8) der Parabel entspricht, betragsmäßig größer gleich der Hälfte eines Durchmessers (d) des Ultraschallsensors (2) ist.

7. Stauschalter (1) nach einem der Ansprüche 4 bis 6, **dadurch gekennzeichnet, dass** ein Betrag des Rotationswinkels (β) 90° bis 180° und vorzugsweise 150° beträgt.

8. Stauschalter (1) nach einem der Ansprüche 4 bis 7, **dadurch gekennzeichnet, dass** die dreieckig gekrümmten Flächenbereiche (5, 6) der Schallumlenkfläche (4) im Bereich aneinander angelegter und fluchtend zu der Sensorachse (S) angeordneter Spitzen (12, 13) miteinander verbunden sind.

9. Stauschalter (1) nach einem der Ansprüche 1 bis 8, **dadurch gekennzeichnet, dass** die Schallumlenkfläche (4) seitliche Versteifungswände (14, 15) aufweist, wobei die Versteifungswände (14, 15) in die aneinandergelegten Spitzen (12, 13) mündende Seitenkanten (16, 17, 18, 19) der Flächenbereiche (5, 6) der Schallumlenkfläche (4) miteinander verbinden.

10. Stauschalter (1) nach einem der Ansprüche 1 bis 9, **dadurch gekennzeichnet, dass** die Schallumlenkfläche (4) des Reflektors (3) aus einem harten und glatten Werkstoff und vorzugsweise aus Kunststoff hergestellt ist.

11. Installationsanordnung umfassend eine Förderanlage mit einer Fördereinrichtung (24), insbesondere einem Förderband, umfassend einen auf der Fördereinrichtung (24) in eine Förderrichtung (F) transportierten Behälter (23), insbesondere eine Flasche, weiter umfassend einen Stauschalter (1) nach einem der Ansprüche 1 bis 10, wobei der Stauschalter (1) vorzugsweise an einem parallel zu der Förderrichtung (F) verlaufenden Geländer (20) der Fördereinrichtung (24) gehalten ist derart, dass die von dem Ultraschallsensor (2) des Stauschalters (1) ausgestrahlte Schallkeule (10) von der Schallumlenkfläche (4) des vor der Apertur (25) des Ultraschallsensors (2) gehaltenen Reflektors (3) zur Ausstrahlung auf den auf der Fördereinrichtung (24) transportierten Behälter (23) umgelenkt wird derart, dass die Schallkeule (10) in einer ersten Ebene, welche eine Erstreckung eines Erfassungsbereichs (26) des Ultraschallsensors (2) in Bezug auf die Förderrichtung (F) definiert, mit einem Zerstreuungswinkel (α) von 90° bis 180° radial aufgeweitet und in einer senkrecht zu der ersten Ebene orientierten zweiten Ebene, welche eine Erstreckung des Erfassungsbereichs (26) des Ultraschallsensors (2) in Bezug auf einen Höhenbereich oberhalb der Fördereinrichtung (24) definiert, gleichbleibend oder weiter zunehmend gebündelt ist.

12. Installationsanordnung nach Anspruch 11, **dadurch gekennzeichnet, dass** die Sensorachse (S) des Ultraschallsensors (2) senkrecht zu der Förderrichtung (F) orientiert ist.

13. Verwendung eines Stauschalters (1) nach einem der Ansprüche 1 bis 10 zur Erkennung eines Staus von auf einer Fördereinrichtung (24) einer Förderanlage transportierten Behältern (23), insbesondere Flaschen.

14. Betriebsverfahren für einen Stauschalter (1) nach einem der Ansprüche 1 bis 10 zur Erkennung eines Staus von auf einer Fördereinrichtung (24) einer Förderanlage transportierten Behältern (23), insbesondere Flaschen, umfassend die folgenden Schritte:
- es wird fortlaufend eine Laufzeit von dem Aussenden des Ultraschallsignals durch den Ultraschallsensor (2) an einen zu erfassenden Behälter (23) bis zum Empfangen eines von dem Behälter (23) zurück reflektierten Echosignals ermittelt,
- aus der ermittelten Laufzeit wird ein gemessener Abstand des Ultraschallsensors (2) zu dem zu erfassenden Behälter (23) bestimmt,
- bei Unterschreiten eines voreingestellten Schaltabstands (30) durch den gemessenen Abstand wird ein Toleranzband (31) um ein Messsignal für den gemessenen Abstand gelegt,
- bleibt das Messsignal für den gemessenen Abstand über ein definiertes Zeitintervall innerhalb des Toleranzbands (31), wird ein Ausgangssignal für den Zustand "Stau erkannt" gesetzt.

## Claims

1. A jam switch (1) for recognizing a jam of containers (23), in particular bottles, transported on a conveying device (24) of a conveyor system, comprising an ultrasonic sensor (2), which outputs a sound lobe (10) sharply focused about a sensor axis (S), wherein the ultrasonic sensor (2) is formed as a proximity switch for sending out an ultrasonic signal and for receiving an echo signal reflected back by a container (23) present in a detection range (26) of the jam switch (1), **characterized in that** a reflector (3) having a sound-deflecting sound deflection surface (4) is situated in front of an aperture (25) of the ultrasonic sensor (2) that outputs the sound lobe (10), the sound deflection surface (4) being shaped and arranged such that the sound lobe (10) output by the ultrasonic sensor (2) is deflected at the sound deflection surface (4) such that the sound lobe (10) is widened in relation to the sensor axis (S) in a first plane with a scattering angle (α) of 90° to 180° and is focused in a second plane oriented perpendicularly to the first plane in a constant or further increasing manner, the sound deflection surface (4) having two surface regions (5, 6), a first surface region (5) of the sound deflection surface (4) being concavely shaped and a second surface region (6) of the sound deflection surface (4) being convexly shaped and the second surface region (6) being arranged at an axially greater distance from the ultrasonic sensor (2), in relation to the sensor axis (S), than the first surface region (5).

2. The jam switch (1) according to claim 1, **characterized in that** the sound deflection surface (4) of the reflector (3) is inclined by 45° in relation to a central beam (9), which runs along the sensor axis (S), of the sound lobe (10) output by the ultrasonic sensor (2).

3. The jam switch (1) according to claim 1 or 2, **characterized in that** the surface regions (5, 6) of the sound deflection surface (4) have the shape of a section of a circumferential surface of a rotational body and preferably of a paraboloid and/or of a hyperboloid and/or of a cone.

4. The jam switch (1) according to claim 1 or 3, **characterized in that** the surface regions (5, 6) of the sound deflection surface (4) are formed by preferably triangularly curved sections of a circumferential surface of a double cone formed from two cones arranged with cone tips directed towards each other, the double cone being formed by rotation by an angle of rotation (β) of a straight line, inclined by 45° with respect to the sensor axis (S) as the axis of rotation, about the sensor axis (S).

5. The jam switch (1) according to claim 1 or 3, **characterized in that** the surface regions (5, 6) of the sound deflection surface (4) are formed by preferably triangularly curved sections of a circumferential surface of a rotational body, the rotational body being formed by rotation with an angle of rotation (β) of a half-parabola about the sensor axis (S) as the axis of rotation, the sensor axis (S) running through a focal point (8) of a parabola formed from the half-parabola and in the focal point (8) being oriented perpendicular to an axis of symmetry of the parabola and the sensor axis (S) intersecting the parabola in a projection focal point (11) projected onto the parabola from the focal point (8).

6. The jam switch (1) according to claim 5, **characterized in that** a focal length (f) of the parabola, which along the axis of symmetry of the parabola corresponds to a distance from a vertex (29) to the focal point (8) of the parabola, is in its magnitude greater than or equal to half of a diameter (d) of the ultrasonic sensor (2).

7. The jam switch (1) according to any of claims 4 to 6, **characterized in that** a magnitude of the angle of rotation (β) is 90° to 180° and preferably 150°.

8. The jam switch (1) according to any of claims 4 to 7, **characterized in that** the triangularly curved surface regions (5, 6) of the sound deflection surface (4) are connected to each other in the region of the tips (12, 13) placed against each other and arranged in alignment with the sensor axis (S).

9. The jam switch (1) according to any of claims 1 to 8, **characterized in that** the sound deflection surface (4) has lateral reinforcement walls (14, 15), the reinforcement walls (14, 15) connecting side edges (16, 17, 18, 19) of the surface regions (5, 6) of the sound deflection surface (4), which side edges terminate in the tips (12, 13) placed against each other.

10. The jam switch (1) according to any of claims 1 to 9, **characterized in that** the sound deflection surface (4) of the reflector (3) is produced from a hard and smooth material and preferably from plastic.

11. An installation arrangement comprising a conveyor system having a conveying device (24), in particular a conveyor belt, comprising a container (23), in particular a bottle, transported on the conveying device (24) in a conveying direction (F), further comprising a jam switch (1) according to any of claims 1 to 10, wherein the jam switch (1) is preferably held on a railing (20), running parallel to the conveying direction (F), of the conveying device (24) such that the sound lobe (10) emitted by the ultrasonic sensor (2) of the jam switch (1) is deflected by the sound deflection surface (4) of the reflector (3) held in front of the aperture (25) of the ultrasonic sensor (2) for emission onto the container (23) transported on the conveying device (24) such that the sound lobe (10) in a first plane, which defines an extent of a detection range (26) of the ultrasonic sensor (2) in relation to the conveying direction (F), is widened radially with a scattering angle (α) of 90° to 180°, and in a second plane oriented perpendicular to the first plane, which defines an extent of the detection range (26) of the ultrasonic sensor (2) in relation to a height range above the conveying device (24), is focused in a constant or further increasing manner.

12. The installation arrangement according to claim 11, **characterized in that** the sensor axis (S) of the ultrasonic sensor (2) is oriented perpendicular to the conveying direction (F).

13. A use of a jam switch (1) according to any of claims 1 to 10 for recognizing a jam of containers (23), in particular bottles, transported on a conveying device (24) of a conveyor system.

14. An operating method for a jam switch (1) according to any of claims 1 to 10 for recognizing a jam of containers (23), in particular bottles, transported on a conveying device (24) of a conveyor system, comprising the following steps:
- continuously ascertaining a propagation time from sending out the ultrasonic signal by the ultrasonic sensor (2) to a container (23) to be detected until receiving an echo signal reflected back by the container (23),
- determining, from the ascertained propagation time, a measured distance of the ultrasonic sensor (2) to the container (23) to be detected,
- in case of the measured distance falling below a preset switching distance (30), placing a tolerance band (31) around a measurement signal for the measured distance,
- if the measurement signal for the measured distance remains within the tolerance band (31) over a defined time interval, setting an output signal for the state "jam detected".

## Revendications

1. Interrupteur de blocage (1) pour la détection d'un bourrage de récipients (23) sur un convoyeur (24) d'une installation de transport), notamment de bouteilles, comprenant un capteur à ultrasons (2) lequel émet un lobe acoustique (10) étroitement focalisé autour d'un axe (S) du capteur, le capteur à ultrasons (2) étant conçu sous forme d'un commutateur de proximité pour l'émission d'un signal ultrasonore et la réception d'un signal d'écho réfléchi par un récipient (23) se trouvant dans une zone de détection (26) de l'interrupteur de blocage (1), **caractérisé en ce qu'**un réflecteur (3) muni d'une surface de déviation acoustique (4) pour la déviation des ultrasons est disposé derrière une ouverture (25) du capteur à ultrasons (2) qui émet le lobe acoustique (10), la conformation et l'agencement de la surface de déviation acoustique (4) étant telles que le lobe acoustique (10) émis par le capteur à ultrasons (2) est dévié par la surface de déviation acoustique (4) de façon à ce que, par rapport à l'axe (S) du capteur, le lobe acoustique (10) s'élargisse dans un premier plan avec un angle de dispersion (α) de 90° à 180° et reste inchangé ou soit plus fortement focalisé dans un second plan d'orientation orthogonale par rapport au premier plan, la surface de déviation acoustique (4) présentant deux zone (5, 6), une première zone (5) de la surface de déviation acoustique (4) étant de forme concave et une seconde zone (6) de la surface de déviation acoustique (4) étant de forme convexe et la seconde zone (6) étant, par rapport à l'axe (S) du capteur, agencée à une distance axiale du capteur à ultrasons (2) supérieure à celle de la première zone (5).

2. Interrupteur de blocage (1) selon la revendication 1, **caractérisé en ce que** la surface de déviation acoustique (4) du réflecteur (3) est inclinée de 45° par rapport à un rayon central (9) du lobe acoustique (10) émis par le capteur à ultrasons (2) le long de l'axe (S) du capteur.

3. Interrupteur de blocage (1) selon la revendication 1 ou 2, **caractérisé en ce que** les zones (5, 6) de la surface de déviation acoustique (4) présentent la forme d'une section d'une surface latérale d'un corps de révolution et de préférence d'un paraboloïde et/ou d'un hyperboloïde et/ou d'un cône.

4. Interrupteur de blocage (1) selon la revendication 1 ou 3, **caractérisé en ce que** les zones (5, 6) de la surface de déviation acoustique (4) sont formées de sections de préférence triangulaires incurvées d'une surface latérale d'un double cône formé de deux cônes agencés da façon à ce que leurs pointes soient orientées l'une vers l'autre, le double cône étant obtenu par rotation autour de l'axe (S) du capteur sur un angle de rotation (β) d'une droite formant axe de rotation inclinée de 45° par rapport à l'axe (S) du capteur.

5. Interrupteur de blocage (1) selon la revendication 1 ou 3, **caractérisé en ce que** les zones (5, 6) de la surface de déviation acoustique (4) sont formées de sections de préférence triangulaires incurvées d'une surface latérale d'un corps de révolution, le corps de révolution étant obtenu par rotation autour de l'axe (S) du capteur sur un angle de rotation (β) d'une demi-parabole, l'axe (S) du capteur passant par un foyer (8) de la parabole formée par la demi-parabole et son orientation au foyer (8) étant perpendiculaire à un axe de symétrie de la parabole, l'axe (S) du capteur intersectant la parabole à un point (11) projeté à partir du foyer (8) sur la parabole.

6. Interrupteur de blocage (1) selon la revendication 5, **caractérisé en ce qu'**une distance focale (f) de la parabole, soit une distance entre un sommet (29) et un foyer (8) de la parabole sur l'axe de symétrie de la parabole, est supérieure ou égale à la moitié d'un diamètre (d) du capteur à ultrasons (2).

7. Interrupteur de blocage (1) selon l'une des revendications 4 à 6, **caractérisé en ce qu'**une valeur de l'angle de rotation (β) est de 90° à 180° et de préférence de 150°.

8. Interrupteur de blocage (1) selon l'une des revendications 4 à 7, **caractérisé en ce que** les zones triangulaires incurvées (5, 6) de la surface de déviation acoustique (4) sont reliées entre elles au niveau de pointes (12, 13) agencées bout à bout dans l'axe (S) du capteur.

9. Interrupteur de blocage (1) selon l'une des revendications 1 à 8, **caractérisé en ce que** la surface de déviation acoustique (4) présente des parois de raidissement (14, 15) latérales, les parois de raidissement (14, 15) reliant entre elles des bords latéraux (16, 17, 18, 19) des zones (5, 6) de la surface de déviation acoustique (4) débouchant au niveau des pointes (12, 13) placées bout à bout.

10. Interrupteur de blocage (1) selon l'une des revendications 1 à 9, **caractérisé en ce que** la surface de déviation acoustique (4) du réflecteur (3) est réalisée en un matériau dur et lisse et de préférence en matière plastique.

11. Agencement comprenant une installation de transport avec un dispositif de transport (24), notamment une bande transporteuse, comprenant un récipient (23) transporté selon une direction de transport (F) sur le dispositif de transport (24), notamment une bouteille, comprenant en outre un interrupteur de blocage (1) selon l'une des revendications 1 à 10, l'interrupteur de blocage (1) étant de préférence fixé à un guide latéral (20) du dispositif de transport (24) parallèle à la direction de transport (F) de façon à ce que le lobe acoustique (10) émis par le capteur à ultrasons (2) de l'interrupteur de blocage (1) soit dévié par la surface de déviation acoustique (4) du réflecteur (3) placé devant l'ouverture (25) du capteur à ultrasons (2) pour rayonner sur le récipient (23) transporté par le dispositif de transport (24) de façon à ce que le lobe acoustique (10) s'élargisse radialement sur un angle de dispersion (α) de 90° à 180°dans un premier plan qui définit une extension de la zone de détection (26) du capteur à ultrasons (2) par rapport à la direction de transport (F), et reste inchangé ou soit plus fortement focalisé dans un second plan orthogonal au premier plan et définissant une extension de la zone de détection (26) du capteur à ultrasons (2) par rapport à une zone verticale au-dessus du dispositif de transport (24).

12. Agencement selon la revendication 11, **caractérisé en ce que** l'orientation de l'axe (S) du capteur à ultrasons (2) est perpendiculaire à la direction de transport (F).

13. Utilisation d'un interrupteur de blocage (1) selon l'une des revendications 1 à 10 pour la détection d'un bourrage de récipients (23) sur un convoyeur (24) d'une installation de transport), notamment de bouteilles.

14. Procédé de fonctionnement d'un interrupteur de blocage (1) selon l'une des revendications 1 à 10 pour la détection d'un bourrage de récipients (23) sur un convoyeur (24) d'une installation de transport), notamment de bouteilles, comprenant les étapes suivantes :
- la durée qui s'écoule entre l'émission ultrasonore par le capteur à ultrasons (2) vers un récipient (23) à détecter et la réception d'un signal d'écho réfléchi par le récipient (23) est déterminée en continu,
- une distance mesurée entre le capteur à ultrasons (2) et le récipient (23) à détecter est calculée à partir de la durée déterminée,
- si la distance mesurée est inférieure à une distance de commutation (30) préréglée une plage de tolérance pour la distance mesurée est fixée autour d'un signal de mesure,
- si le signal de distance mesurée reste à l'intérieur de la plage de tolérance (31) pendant un intervalle de temps défini un signal de sortie correspondant à l'état « bourrage détecté » est activé.
